# EUROPEAN PATENT APPLICATION

(11) **EP 1 505 587 A2**
(43) Date of publication of application: **09.02.2005**
(21) Application number: 04017272.8
(22) Date of filing: 22.07.2004
(51) Int. Cl.: G11B 7/26, G11B 7/24

(54) **Optical information recording medium and a method of manufacturing the same**

(30) Priority: 07.08.2003 JP 2003289304
(71) Applicant: MATSUSHITA ELECTRIC INDUSTRIAL CO., LTD., Kadoma-shi, Osaka 571-8501 (JP)
(72) Inventor: Hisada, Kazuya, Osaka City Osaka 538-0054 (JP); Ohno, Eiji, Hirakata City Osaka 573-0171 (JP)
(74) Representative: Eisenführ, Speiser & Partner

(57) **Abstract**

An object of the present invention is to provide a method for manufacturing an optical information recording medium and an optical information recording medium itself, forming a stacked layer with a uniform thickness, without being affected by a previously formed underlayer. An optical information recording medium having a light-transmitting layer includes a plurality of resin layers formed on at least one main surface 201a of a substrate 201. To solve the object, in the plurality of resin layers, an inside diameter of the (N+1)^{th} (N ≥ 1) resin layer, counted from the substrate is applied, is larger than that of the N^{th} resin layer. This method includes a plurality of spin coating methods for covering a center hole 202 of the substrate 201 by a cap, and then forming a resin layer on the substrate 201. The outside diameter of a cap 224 to cover the center hole 202 used for the (N+1)^{th} (N ≥ 1) spin coating process is larger than the outside diameter of a cap 214 used for the N^{th} spin coating process.

## Description

### BACKGROUND OF THE INVENTION

### 1. Field of the Invention

The present invention relates to an optical information recording medium and a method of manufacturing the same, and particularly relates to an optical information recording medium having multiple layers and a method of manufacturing the same.

### 2. Description of the Prior Art

Recently, research relating to various optical information media has been occurring in the information recording field. Optical information recording methods have been emerging which are applicable to a range of uses, because these methods can allow media to have higher density, can record/reproduce information by a non-contact method, and can also achieve these objectives at a low price. Currently, an optical disk has a structure produced, for example, by forming an information layer on a transparent resin layer with a thickness of 1.2 mm, and then covering and protecting the layer with an over coating, or by forming information layers on one or both sides of a transparent resin layer with a thickness of 0.6 mm, and then laminating two of the information layers.

Recently, as a way to increase recording density of optical disks, methods have been studied such as increasing the numerical aperture (NA) of an objective lens, and shortening the wavelength of a laser. In these methods, if the thickness of a substrate on the recording/reproducing side (the side on which an optical laser is incident) is thin, the influence of an aberration of the laser spot decreases, and allowance of a disk having a gradient angle (tilt) increases. From this, an idea was proposed to set the thickness of the recording/reproducing carrier to be around 0.1 mm, NA to be around 0.85, and the wavelength of a laser to be around 400 nm. Here, because of effects on the focus of the recording/reproducing light and a spherical aberration, it is preferable that the thickness variation of the recording/reproducing carrier is reduced to be within 5%.

As a method of forming such a substrate on the recording/reproducing side of an optical disk with a thickness of 0.1 mm, a spin coating method has been proposed (see Japanese unexamined patent application H09-129836). When making the recording/reproducing carrier by the spin coating method, if liquid is dropped directly onto the substrate, the thickness of the substrate will not be uniform in a circumferential direction. Therefore, to solve this problem, the present invention proposes a method in which the liquid is dropped on the cap which covers the center hole of the substrate to spread the liquid uniformly in a circumferential direction.

In order to further increase recording density, even in an optical disk having a plurality of layers (a multiple structure), it is preferable that the multiple layer structure is formed by an inexpensive method such as the spin coating method. Here, as mentioned above, to make the thickness of the layer uniform in a circumferential direction, using a cap is preferable.

When multiple layers are present, however, the thickness variation of the dropped liquid still largely depends on the unevenness of the surface of an underlayer, especially the difference of layer levels existing near an inner circumferential edge of the underlayer.

### SUMMARY OF THE INVENTION

Therefore, in manufacturing optical information recording media, it is an object of the present invention to form stacked layers with a uniform thickness using a spin coating method, without being affected by a previously formed underlayer.

An optical information recording medium of the present invention includes a substrate and a light-transmitting layer including a plurality of resin layers being formed on a main surface of the substrate. An inside diameter of the (N+1)^{th} (N ≥ 1) resin layer counted from the substrate is applied is larger than that of the N^{th} resin layer.

This makes it possible to stack layers with a uniform thickness in the circumferential direction, without being affected by a previously formed underlayer. Note that it is preferable that the inside diameter of the (N+1)^{th}(N ≥ 1) resin layer is larger than 0.1 mm or more, and more preferably, 0.5 mm or more.

In addition, it is preferable that the inside diameters of the plurality of resin layers increase in a step-wise manner from a center hole of the substrate.

The plurality of resin layers preferably include a recording layer and an interlayer. Thus, the information recording medium has a higher density.

A light-transmitting layer that exists on the main side of the substrate is preferably radially outward of pits or lands (it is more likely to be lands) caused by the shape of the substrate. By covering the pits or the lands on the main surface by a cap, the thickness of the resin layer becomes uniform.

The surface of the light-transmitting layer is preferable to have a pencil hardness of H or more so that the layer will not easily become scratched. It is more preferable that the pencil hardness is F or more. Here, the pencil hardness is determined by placing a sharpened pencil against the surface with a weight of 1 kg at an angle of 45 degrees, pulling the pencil under these conditions, and determining whether the surface becomes scratched or not. The pencil hardness is measured in accordance with JIS-K5400.

The light-transmitting layer preferably has a thickness within a range between 10 µm and 200 µm. Thus, a recording medium is obtained with higher density and which is not easily affected by bending. It is more preferable that the light-transmitting layer has a thickness within a range between 50 µm and 120 µm.

In addition, it is preferable that a reflection layer is formed on the main surface of the substrate such that the reflection layer is between the main surface and the light-transmitting layer. Thus, a recording medium with a higher density is formed, with bending tolerance equivalent to that of a conventional DVD.

At least one of the plurality of resin layers preferably includes a radiation-setting resin, because the medium can be made inexpensively without using expensive materials.

In a method of manufacturing an optical information recording medium having a substrate and a light-transmitting layer including a plurality of resin layers formed on at least a main surface of the substrate, a plurality of spin coating steps are performed in which a resin is applied onto a cap covering a center hole of the substrate while the substrate is being rotated so as to form a plurality of resin layers on the substrate. An outside diameter of a cap used for the (N+1)^{th}(N ≥ 1) spin coating step is larger than an outside diameter of a cap used for the N^{th} spin coating step.

In this manufacturing method, when performing the (N+1)^{th}(N ≥ 1) spin coating step, it is possible to stack a resin layer having a uniform thickness without being affected by the resin layer formed by the N^{th} spin coating step, by using a cap of which an outside diameter is larger than that of the cap used in the N^{th} spin coating process.

In another method of manufacturing an optical information recording medium having a substrate and a light-transmitting layer including a plurality of resin layers formed on at least a main surface of the substrate, a plurality of spin coating steps are performed in which a resin is applied onto a cap covering a center hole of the substrate while the substrate is being rotated so as to form a resin layer on the substrate. An outside diameter of a cap used for the (N+1)^{th} (N ≥ 1) spin coating step is larger than an inside diameter of a resin layer formed by the N^{th} spin coating step.

In this manufacturing method, when performing the (N+1)^{th}(N ≥ 1) spin coating step, it is possible to stack a resin layer having a uniform thickness without being affected by the resin layer formed by the N^{th} spin coating step, by using a cap of which an outside diameter is larger than that of an inside diameter of a resin layer formed by the N^{th} spin coating process.

In another method of manufacturing an optical information recording medium having a substrate and a light-transmitting layer including a resin layer formed on at least a main surface of the substrate, a first layer is formed, without using a spin coating step, a center hole of the substrate is covered by a cap, and then a resin layer is formed on the first layer using a spin coating method. An outside diameter of the cap is larger than an inside diameter of the resin layer.

In this manufacturing method, it is possible to stack a resin layer having a uniform thickness without being affected by the first resin layer, by using a cap of which an outside diameter is larger than an inside diameter of the first resin layer.

In another method for manufacturing an optical information recording medium having a substrate and a light-transmitting layer including a resin layer formed on at least a main surface of the substrate, a resin is applied, in a spin coating step, onto a cap covering a center hole of the substrate while the substrate is being rotated so as to form a resin layer on the main surface of the substrate. The pits or lands on the main surface are covered by a cap.

In this manufacturing method, it is possible to stack a resin layer having a uniform thickness without being affected by pits or lands on the main surface of the substrate, by using a cap covering the pits or the lands during the spin coating step.

In the method of the present invention, a cap covering the center hole of the substrate is preferably conical. If the cap has a conical shape, a resin can easily diffuse to the surrounding area because the resin is supplied from the central region.

In an optical information recording medium and its manufacturing method of the present invention, forming stacked layers with a uniform thickness without being affected by a previously formed underlayer become possible. In other words, it is possible to form a light-transmitting layer having a uniform thickness over all of an information area on a substrate, and particularly when forming multiple layers on an information recording medium, it is also possible to form each layer with a uniform thickness.

### BRIEF DESCRIPTION OF THE DRAWINGS

FIG. 1 is a cross-sectional diagram showing an example of a manufacturing method for an optical information recording medium described in Embodiment 1 of the present invention.
FIG 2 is a cross-sectional diagram showing an example of a manufacturing method for an optical information recording medium described in Embodiment 1 of the present invention.
FIG. 3 is a cross-sectional diagram showing a manufacturing method for an optical information recording medium described in Embodiment 2 of the present invention.
FIG 4 is a cross-sectional diagram showing a manufacturing method for an optical information recording medium described in Embodiment 2 of the present invention.
FIG 5 is a cross-sectional diagram showing a manufacturing method for a double-layer optical information recording medium described in Embodiment 2 of the present invention.
FIG 6 is a cross-sectional diagram showing a manufacturing method for an optical information recording medium described in Embodiment 3 of the present invention.
FIG 7 is a cross-sectional diagram showing a manufacturing method for an optical information recording medium described in Embodiment 4 of the present invention.
FIG. 8 is a cross-sectional diagram showing a manufacturing method for an optical information recording medium described in Embodiment 4 of the present invention.
FIG. 9 is a cross-sectional diagram comparing manufacturing methods for a conventional optical information recording medium and an optical information recording medium described in Embodiment 1 of the present invention.
FIG.10 shows graphs of the uniformity of the resin layer's thickness in a circumferential direction to compare the performance of a conventional manufacturing method and a manufacturing method described in Embodiment 1 of the present invention.

### DESCRIPTION OF THE PREFERRED EMBODIMENTS

Hereinafter, embodiments of the present invention will be explained by referring to the figures. These figures are shown by way of cross-section unless otherwise specified. If the figures are symmetric, then only a portion from the axis of symmetry is shown, and the rest of the figure will be omitted.

### Embodiment 1

Here, an example of a manufacturing method according to the present invention for an optical information recording medium, and the optical information recording medium itself, will be described in detail.

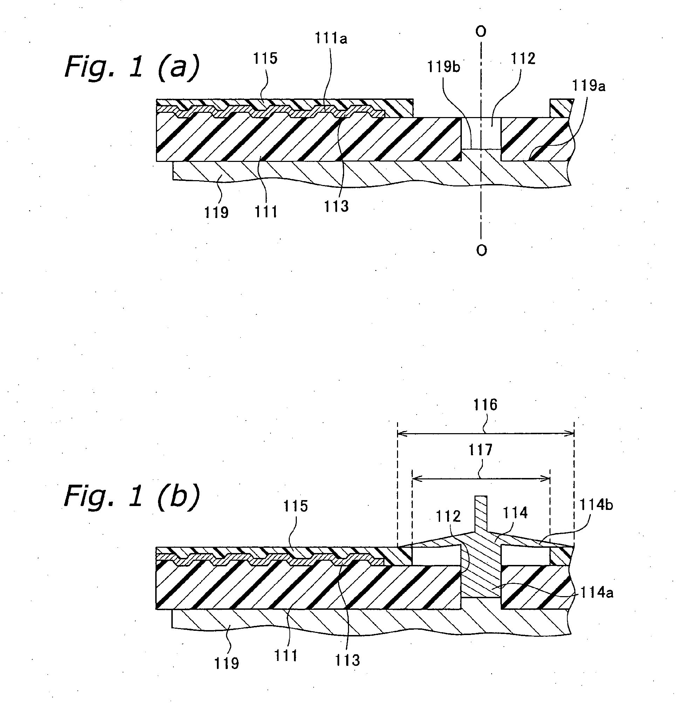

In Fig. 1(a), a substrate 111 is shown which has been set on a rotary table 119. The rotary table 119 is connected to a driving unit (which is not shown in the figures), and includes an upper surface 119a and an insertion part 119b extending upward. Note that the line O-O shown in the figure is a central axis of rotation.

On the substrate 111, a circular center hole 112 is formed. In the lower part of the center hole 112, insertion part 119b of the rotary table 119 is inserted, by which the substrate 111 is centered relative to the rotary table 119 in a radial direction. On a main surface 111a (the upper side surface in the figure) of the substrate 111, an information recording layer 113 is formed. The information recording layer 113 consists of pre-grooves formed on the main side 111a of the substrate 111, and a recording film which contains phase change materials or dielectric materials formed on the pre-grooves. Furthermore, on the main surface 111a of the substrate 111, a first resin layer 115 is formed. The first resin layer 115 covers the information recording layer 113. As shown in Fig. 1(b), an inside diameter 117 of the first resin layer 115 is larger than an outside diameter of the center hole 112.

Hereafter, a specific example of a manufacturing method and values of the above-described structure are explained. The substrate 111 may have a thickness of 1.1 mm and a diameter of 120 mm, for example. The outside diameter of the center hole 112 is about 15 mm. The information recording layer 113 has an inside diameter of about 40 mm, and its depth on the main side 111a of the substrate 111 is about 20 nm. The first resin layer 115 has a thickness of about 90 µm and an inside diameter of about 23 mm. The first resin layer 115 consists of a sheet substrate and an adhesive that are fixed together as an integrated unit. The first resin layer 115 can be made by applying the integrated unit onto the substrate 111 with a roller. Note that, the first resin layer 115 may also be formed by a method of superimposing both items in a vacuum. The sheet substrate forming the first resin layer 115 is made of a polycarbonate, for example, and has a thickness of about 70 µm. Note that, as the sheet substrate, resin materials other than a polycarbonate may also be used, such as acryl or olefm. The adhesive material is a sheet of radiation-setting resin or an adhesive in which the main components are materials such as acryl or urethane, and has a thickness of 20 µm.

A cap 114 is a member for covering the center hole 112 of the substrate 111 during a spin coating process. The cap 114 has a conical shape, and in more detail, it has a cylindrical part 114a to be inserted into the center hole 112, and on the top of the cylindrical part 114a, there is also a conical part 114b with a conical upper surface. An outside diameter 116 of the cap 114 is larger than an inside diameter 117 of the first resin layer 115. Note that, as a material of the cap, aluminum and the like may be used, for example. The material may be metals other than aluminum, or may be resin materials such as polyacetal. The thickness can be arbitrarily set.

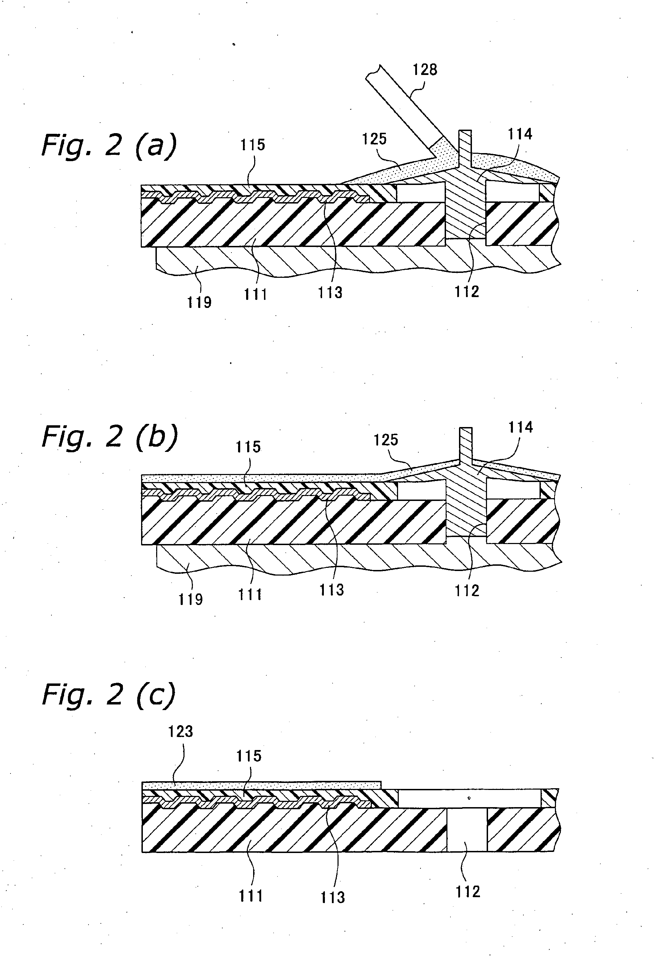

Next, the process of spin coating to form a second resin layer 123 on the first resin layer 115 is explained. As in Fig. 1(b), a rotary table 119 is rotated at a speed of about 60 rpm, with the cap 114 set on the substrate 111. Further, as in Fig. 2(a), melted resin 125 is dropped onto the conical part 114b of the cap 114 from a nozzle 128 of a resin supplier. The melted resin 125 is a radiation-setting resin (for example, acryl, urethane, and epoxy), and the coefficient of viscosity is about 100 mPa.s. Next, when the substrate 111 is rotated with a speed of about 4000 rpm for about 5 seconds, the melted resin 125 flows along the upper face of the cap 114 radially outward, and spreads radially outward on the upper surface of the first resin layer 115. Then, the melted resin 125 is hardened by applying radiation, and after that, the cap 114 is removed from the substrate 111. From the above-mentioned process of spin coating, a new second resin layer 123 with a thickness of about 10 µm is formed on the upper surface of the first resin layer 115, as shown in Fig.2(c).

During the above-mentioned process of spin coating, the melted resin 125 flows radially outward toward the circumference in an uniform state, because the cap 114 covers the inside diameter part of the first resin layer 115, where there is a difference in layer level on the main surface 111a of the substrate 111. As a result, the second resin layer 123 is formed with a uniform thickness in the circumferential direction. Note that, with a conventional disk, where the melted resin passes over the layer level, because of the uneven periphery of the inside diameter of the first resin layer 115, the resin flows radially outward smoothly in some places but not smoothly in other places. As a result, the thickness of a resin layer is not uniform in the circumferential direction.

In addition, as is clear from Fig. 2(b), the outside diameter 116 of the cap 114 is smaller than the inside diameter of the information recording layer 113 which is being produced. Therefore, as shown in Fig. 2(c), the removed portion (an inside diameter portion) of the second resin layer 123 which is created when removing the cap 114 does not cover the information recording layer 113, and the thickness of the second resin layer 123 corresponding to the information recording layer 113 does not have a large variation.

In this embodiment, an example of a re-writeable optical disk is described. In addition, the present invention can be applied to a write-once type and a read-only type optical disk having Al or Ag as main components in the reflective layer. Furthermore, the present invention can be applied not only in situations in which only one layer is formed on the information recording layer as shown in this embodiment, but also situations in which multiple layers are formed on the information recording layer, or a multi-layered optical disk that includes two or more information recording layers.

Hereinabove, the embodiment of the present invention is explained by examples. Note that, the invention is not limited to the above-mentioned embodiment, and it is also possible to apply the present invention to other embodiments based on the technical idea of the present invention.

### Embodiment 2

Here, an example of a method for manufacturing an optical information recording medium according to the present invention and an optical information recording medium itself is described. Note that, for descriptions which correspond to Embodiment 1, overlapping explanations may be omitted.

Using the same substrate as in Embodiment 1, a plurality of layers is formed on the information recording layer by spin coating. Because maintaining uniformity of thickness is also preferable on a multi-layer structure, the process described in Embodiment 1 is repeated several times. Each of the processes includes steps of covering a center hole of a substrate by a cap, dropping resin materials on the cap and rotating both the substrate and the cap in order to expand the resin on the substrate. At this time, as already mentioned above, if there is a difference in layer level at the diameter of the previously formed layers, then the thickness in the circumferential direction becomes non-uniform. Therefore, when forming a multiple layer structure, several caps should be prepared that each have a different outside diameter, and while continuing to repeat the spin coating, it is preferable to use caps having a larger outside diameter. By using the caps having a larger outside diameter, it is possible to form a layer with a uniform thickness which is not affected by a previously formed underlayer.

Hereinafter, a specific example of forming a light-transmitting layer having a 3-layer structure on an information recording layer is explained.

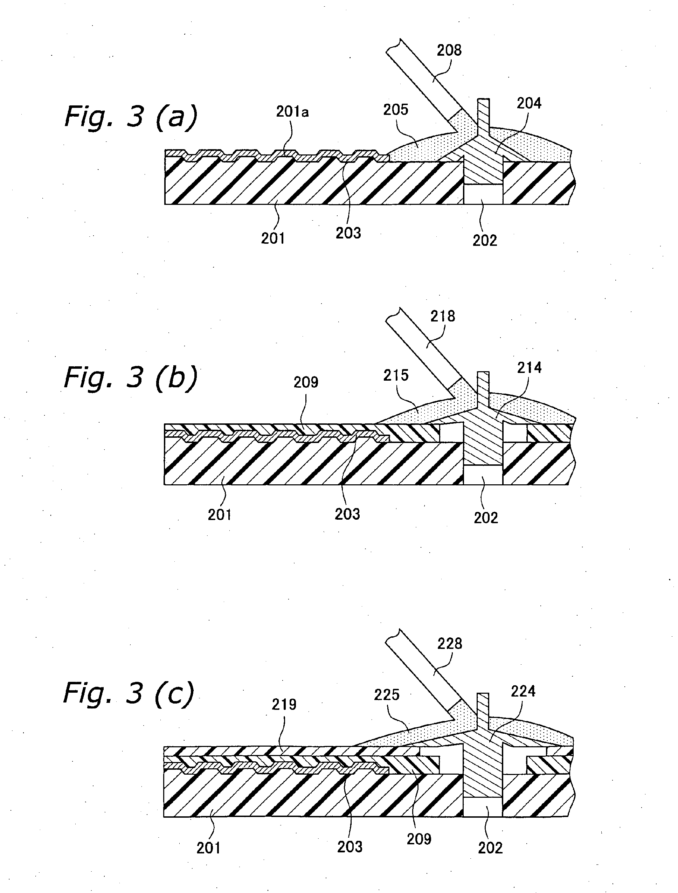

The spin coating method using a cap is the same as the method shown in Fig. 2(a) and Fig. 2(b). As shown in Fig. 3(a), a cap 204 is used with an outside diameter of about 23 mm, and a radiation-setting resin material 205 with a coefficient of viscosity of 40 mPa.s is rotated and expanded at a speed of about 4000 rpm for about 5 seconds, by using a nozzle 208. Then after it has hardened, a corrosion protection layer 209 with a thickness of 5 µm is produced. The corrosion protection layer 209 is a layer to protect the information recording layer 203 from corrosion by water and the like. As a resin material, a resin of which the main components are acryl or urethane is used. Note that, because a purpose of the resin material is to prevent corrosion, it is preferable to use a material that does not allow water to penetrate therethrough, and having pencil hardness after hardening of H or more.

Next as shown in Fig. 3(b), on the corrosion protection layer 209, a radiation-setting resin material 215 with a coefficient of viscosity of 2500 mPa.s is rotated and expanded at a speed of about 8000 rpm for about 20 seconds, using a cap 214 with an outside diameter of about 25 mm and a nozzle 218. Then after it has hardened, a buffer layer 219 with a thickness of about 90 µm is produced. The buffer layer 219 is for reducing the effect of bending the light-transmitting layer, which is damaging for an optical disk. This is why the hardness of the buffer layer 219 is low after it has set. As a resin material, a resin of which the main components are acryl or urethane is used. Because a purpose of the resin material here is to reduce bending, it is preferable to use resin material that is still soft after the hardening process, and having pencil hardness within the range B to HB. In the process of forming the buffer layer, the layer can be formed with uniform thickness by using the cap 214 which has a larger outside diameter than that of the cap used in the process of forming the corrosion protection layer.

Finally, as shown in Fig. 3(c), on the buffer layer 219, a cap 224 with an outside diameter of about 27 mm is used. A radiation-setting resin material 225 with a coefficient of viscosity of 40 mPa.s is rotated and expanded at a speed of about 4000 rpm for about 5 seconds, by using a nozzle 228. Then after it has hardened, a protection layer 229 with a thickness of 5 µm is produced. Because a purpose of the protection layer 229 is to protect the light-transmitting layer 230 of the optical disk from scratches and the like, it is preferable that the pencil hardness after the hardening process is higher. As the resin material, a material is selected to have a pencil hardness of H or more after the hardening process, and which has little friction (easy to slip).

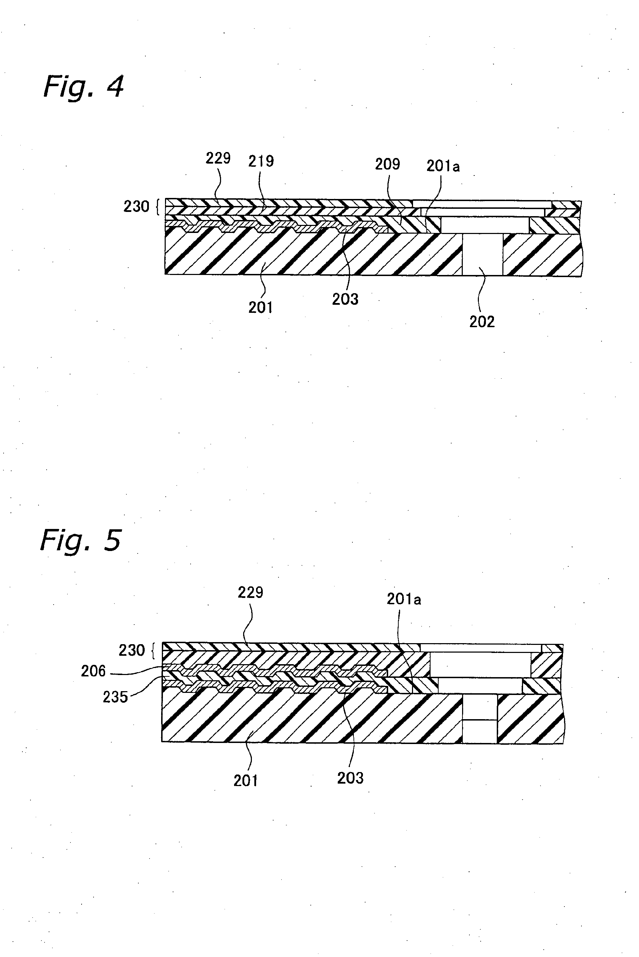

The resulting optical information recording medium is shown in Fig. 4. In the present example of the embodiment, the described medium has the light-transmitting layer 230 having a thickness of about 100 µm, a wavelength of about 400 nm, and a capacity of 20GB or more, performing recording and reproducing using a lens with NA of about 0.85. In this type of high density optical information recording medium, reading and reproducing signals may be heavily deteriorated by dust and scratches in the light-emitting layer. Thus, the surface of the light-transmitting layer is preferably hard so as not to be easily scratched. More specifically, the pencil hardness of the surface is preferably H or more. F or more is further preferable. On the main surface 201a of the substrate 201 a, the corrosion protection layer 209, the buffer layer 219, and the protection layer 229 are formed in this order. Their inside diameters will also increase in this order.

In this embodiment, the example of a re-writeable information reproducing type optical disk is shown. In addition, a write-once read multiple type and a read-only type having Al or Ag as main components in the reflective layer are also possible. Furthermore, the present invention can be applied not only to the case that only one layer is formed on the information recording layer as shown in this embodiment, but also to a situation in which multiple layers are formed on the information recording layer, or a multi-layered optical disk that includes two or more information recording layers.

As another example of the multi-layer optical disk, a two-layered optical disk is shown in Fig. 5. In this figure, the interlayer 235 is inserted between the first information recording layer 203 and the second information recording layer 206. Here too, on the main surface 201a of the substrate 201, the corrosion protection layer 209, the buffer layer 219, and the protection layer 229 are formed in this order, and their inside diameters also increase in this order.

In all situations, the outside diameter of the cap is smaller than the inside diameter of the information recording layer 203 of the optical information recording medium which is being produced. Because the diameter of the cap does not cover the information area, the removed portion (an inside diameter portion of each layer) that is created when removing the cap does not cover the information area.

Hereinabove, the embodiment of the present invention is explained by examples. Note that, the invention is not limited to the above-mentioned embodiment and it is also possible to apply the present invention to other embodiments based on the technical idea of the present invention.

### Embodiment 3

Here, an example of a method for manufacturing an optical information recording medium according to the present invention and an optical information recording medium itself is explained. Note that, for descriptions which correspond to Embodiments 1 and 2, overlapping explanations may be omitted.

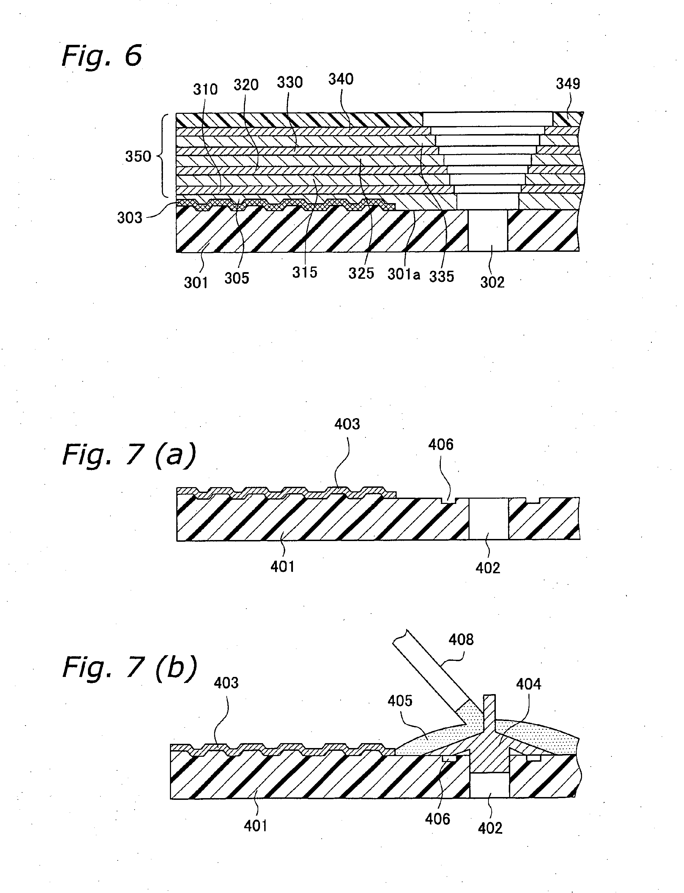

In Embodiment 2, the example of forming multiple layers by increasing the outside diameter of the cap in a step-wise manner is described. Hereafter, an optical information recording medium with much higher density and made by the same manufacturing method is explained. An example of the optical information recording medium is shown in Fig. 6. Because layers are formed from the lower side shown in the figure by using caps of which the outside diameter is gradually increased, the medium has a structure in which the inside diameters of each layer increases in a step-wise manner.

Pre-grooves are formed on the main surface 301a of a substrate 301, and a reflective layer 303 is formed thereon. The recording and reproducing of each information layer 310, 320, 330, and 340 is performed using the same pre-grooves. The recording is performed using the recording layer material's two photons absorption property by applying a laser. The light-transmitting layer 350 is structured by alternatively stacking the information layers 310, 320, 330 and 340 and the internal layers 305, 315, 325 and 335. On the surface of the light-transmitting layer 350, a protection layer 349 is formed. The information layers 310, 320, 330, and 340 have a thickness of about 1 µm, the internal layers 305, 315, 325, and 335 have a thickness of about 19 µm, and the protection layer 349 has a thickness of about 20 µm.

In this example, four recording layers 310, 320, 330, and 340 are present, but 30 layers, 100 layers, or more is possible by making the recording layers and the internal layers thinner and stacking many layers.

For the recording layer, a radiation-setting resin was used that included a colorant and that can enable recording by a photon mode. For the colorant, photochromic materials such as diarylethene are used to give some amount of photosensitivity. For the interlayer, a radiation-setting resin is used in which the main component materials are almost transparent against the recording/reproducing light.

In an optical system for recording to and reproducing from such an optical information recording medium, it is preferable that the system has a higher peak power so as to control the two photon absorption. The peak power may be 1W or more. Or, a pulse laser may be used with a pulse width preferably within the range from several ps to several ns.

Hereinabove, the embodiment of the present invention is explained by examples. Note that, the present invention is not limited to the above-mentioned embodiment, and the present invention may be applied to other embodiments based on the technical idea of the present invention.

### Embodiment 4

Here, an example of a method for manufacturing an optical information recording medium according to the present invention and an optical information recording medium itself is explained. Note that, for descriptions which correspond to embodiments 1 to 3, overlapping explanations may be omitted.

In Embodiments 1 and 2, the example of reducing the thickness variation caused by the difference in layer level at the inside diameter of the previously formed layers on the information recording layer was addressed. In this section, a situation in which a difference in layer level is present in the substrate itself is described.

When making a substrate by an injection molding method or the like, to transcribe pre-grooves for the information recording layer or patterns of pits and lands on a substrate, an unwanted groove 406 may be formed on the main surface 401 a of the substrate 401, as shown in Fig. 7(a). This is the result of using a tool for fixing the substrate having pre-grooves and the patterns of pits and lands. A groove 406 is formed near a circular center hole 402, for example. The depth of the groove 406 is about 200 µm, for example. The groove 406 may make the thickness of the resin layer 409 non-uniform.

Similarly to the situations described in Embodiments 1 and 2, a layer having a uniform thickness can be formed by a spin coating method, by using a cap 404 with an outside diameter large enough to cover the groove 406, as shown in Fig. 7(b). The thickness may be non-uniform not only with a groove, but also with a and or a land with a ring shape. In these situations too, by using a cap with an outside diameter which is large enough to cover these lands, forming a layer with a uniform thickness by a spin coating method is possible.

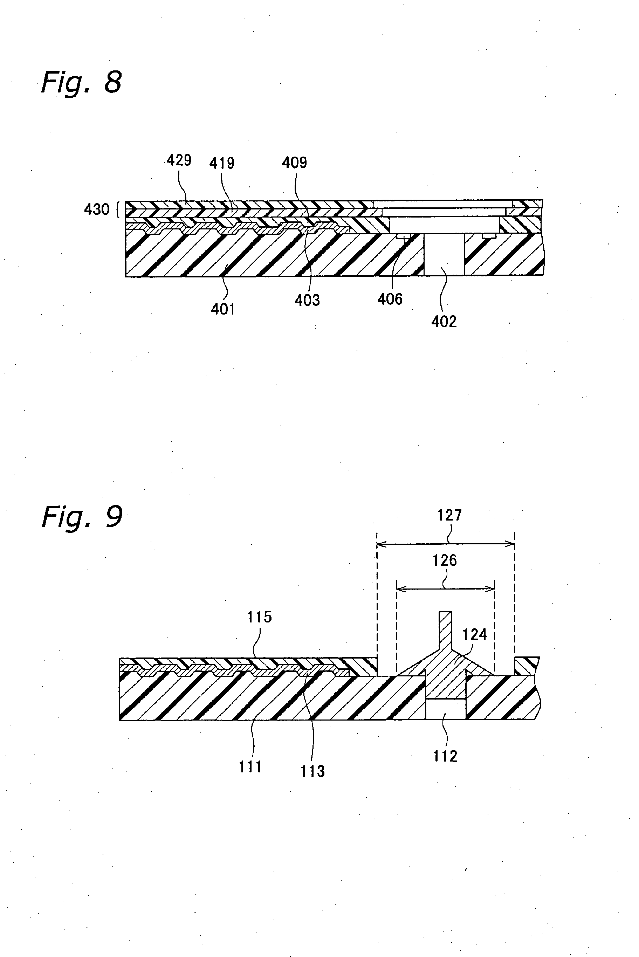

Fig. 8 shows an optical information recording medium using such a substrate and which is made by the same method as described in Embodiment 2. Thus, by forming the light-transmitting layer 430 radially outward of the groove 406, an optical information recording medium with a uniform thickness in the circumferential direction is produced.

Hereinabove, the embodiment of the present invention is explained by examples. Note that, the invention is not limited to the above-mentioned embodiment and it is also possible to apply the present invention to other embodiments based on the technical idea of the present invention.

### (Example 1)

Hereafter, an experimental example is described. As an example of the present invention, the manufacturing method for an optical information recording medium shown in Embodiment 1 was used. When forming the second resin layer 123 as a protection layer on the first resin layer 115, the thickness variation of the second resin layer 123 was measured and compared between the two situations described below: the first is the situation shown in Fig. 1 (b) in which a cap 114 with an outside diameter 116 which is larger than the inside diameter 117 of the first resin layer 115 is used; and the second is the situation shown in Fig. 9 in which a cap 124 with an outside diameter 126 which is smaller than the inside diameter 127 of the first resin layer 115 is used.

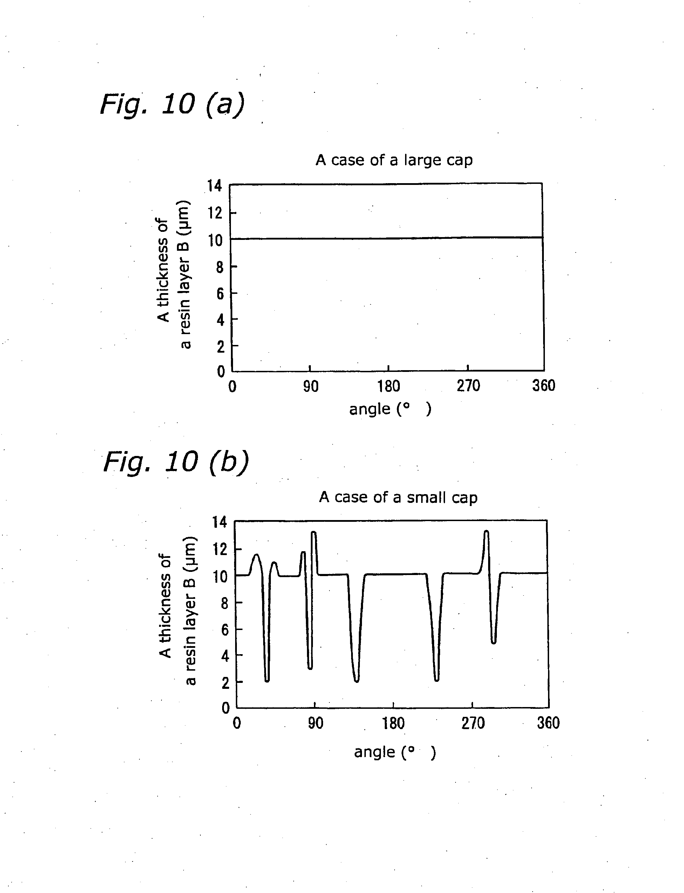

Fig. 10(a) and (b) show the results of the thickness variation at a radius of 40 mm all the way around the disk. In situations in which the cap 114 is used, the variation is quite uniform (Fig. 10 (a)), while in situations in which the cap 124 is used, extreme variation in the circumferential direction was apparent (Fig. 10(b)). Thus, it was found that when using a cap with an outside diameter which is larger than the inside diameter of the resin layer beneath, a layer with highly uniform thickness can be formed when applying a spin coating method.

## Claims

1. An optical information recording medium comprising:
a substrate and a light-transmitting layer including a plurality of resin layers formed on a main surface of the substrate, wherein
an inside diameter of the (N+1)^{th} (N ≥ 1) resin layer counted from the substrate is larger than that of the N^{th} resin layer.

2. The medium of claim 1, wherein the inside diameters of the plurality of resin layers increases in a step-wise manner from a center hole of the substrate.

3. The medium of claim 1 or 2, wherein the plurality of resin layers includes a recording layer and an interlayer.

4. The medium of claim 1, wherein the resin layer formed on the main surface of the substrate is radially outward of a pit or a land existing on the main surface.

5. The medium of claim 1, wherein a surface of the light-transmitting layer has a pencil hardness of H or more.

6. The medium of claim 1, 4 or 5, wherein the light-transmitting layer has a thickness within a range between 10 µm and 200 µm.

7. The medium of claim 6, wherein the light-transmitting layer has a thickness within a range between 50 µm and 120 µm.

8. The medium of claim 1, 2 or 4, further comprising a reflection layer being formed on the main surface of the substrate such that the reflection layer is between the main surface and the light-transmitting layer.

9. The medium of claim 1, 2 or 3, wherein at least one of the plurality of resin layers includes a radiation-setting resin.

10. A manufacturing method for an optical information recording medium having a substrate and a light-transmitting layer including a plurality of resin layers being formed on a main surface of the substrate, comprising the steps of:
applying, in a plurality of spin coating steps, a resin onto a cap covering a center hole of the substrate while the substrate is being rotated so as to form a resin layer on the substrate, wherein
an outside diameter of a cap used for the (N+1)^{th} (N ≥ 1) spin coating step is larger than an outside diameter of a cap used for the N^{th} spin coating step.

11. A manufacturing method for an optical information recording medium having a substrate and a light-transmitting layer including a plurality of resin layers formed on a main surface of the substrate, comprising the steps of:
applying, in a plurality of spin coating steps, a resin onto a cap covering a center hole of the substrate while the substrate is being rotated so as to form a resin layer on the substrate, wherein
an outside diameter of a cap used for the (N+1)^{th} (N ≥ 1) spin coating step is larger than an inside diameter of a resin layer formed by the N^{th} spin coating step.

12. A manufacturing method for an optical information recording medium having a substrate and a light-transmitting layer including a resin layer being formed on at least one main surface of the substrate, comprising the steps of:
forming a first layer, without employing a spin coating method, on the main surface of the substrate which has a center hole; and
forming a resin layer on the first layer by applying a resin onto a cap covering the center hole of the substrate while the substrate is being rotated so as to form the resin layer on the substrate, wherein
an outside diameter of the cap is larger than an inside diameter of the center hole of the first layer.

13. A manufacturing method for an optical information recording medium having a substrate and a light-transmitting layer including a resin layer being formed on a main surface of the substrate, comprising the step of:
applying a resin onto a cap covering a center hole of the substrate while the substrate is being rotated so as to form a resin layer on the main surface of the substrate, wherein
the cap covers a pit or a land on the main surface during the resin application step.

14. The manufacturing method for an optical information medium of claim 10 or 11, wherein at least one of the plurality of resin layers includes a radiation-setting resin.

15. The manufacturing method for an optical information medium of claim 10 or 11, wherein at least one of the plurality of resin layers is an information recording layer.

16. The manufacturing method for an optical information medium of claim 12 or 13, wherein the resin layer includes a radiation-setting resin.

17. The manufacturing method for an optical information medium of claim 12 or 13, wherein the resin layer is an information recording layer.

18. The manufacturing method for an optical information medium of any one of claims 10 to 17, wherein the cap is conical.
